# EUROPÄISCHE PATENTSCHRIFT

(11) **EP 4 281 687 B1**
(45) Veröffentlichungstag und Bekanntmachung des Hinweises auf die Patenterteilung: **21.01.2026**
(21) Anmeldenummer: 21844226.7
(22) Anmeldetag: 17.12.2021
(51) Int. Cl.: F16H 29/20, F16H 29/14, F16H 29/12, F16H 23/04

(54) **ZAHNRADGETRIEBE MIT TAUMELKÖRPER**
GEARWHEEL TRANSMISSION COMPRISING WOBBLE MEMBER
TRANSMISSION À ROUE DENTÉE COMPRENANT UN ÉLÉMENT OSCILLANT

(30) Priorität: 22.12.2020 DE 102020134710
(43) Veröffentlichungstag der Anmeldung: 29.11.2023
(73) Patentinhaber: SED-EF GmbH, 21029 Hamburg (DE)
(72) Erfinder: DOGANER, Serkan, 22769 Hamburg (DE)
(74) Vertreter: Gülser Kinali, Zeynep
(86) Internationale Anmeldenummer: PCT/EP2021/086672
(87) Internationale Veröffentlichungsnummer: WO 2022/136197

(56) Entgegenhaltungen:
- DE-A1- 102008 001 491
- DE-C- 822 460
- IT-A1- VI20 110 190
- US-A- 3 385 135

## Beschreibung

### TECHNISCHES GEBIET

Die Erfindung betrifft ein Zahnradgetriebe umfassend ein Gehäuse, eine Antriebswelle, die drehbar in dem Gehäuse gelagert ist und ein Abtriebszahnrad zur Verbindung mit einer Abtriebswelle, das ebenfalls drehbar in dem Gehäuse gelagert ist. Das Zahnradgetriebe umfasst einen Getriebemechanismus, der die Antriebswelle und das Abtriebszahnrad betriebsmäßig koppelt. Der Getriebemechanismus umfasst einen Taumelkörper, der zwischen Antriebswelle und Abtriebszahnrad angeordnet ist und der dazu ausgebildet ist, bei Drehung der Antriebswelle eine Taumelbewegung auszuführen, wobei der Taumelkörper mit dem Abtriebszahnrad derart gekoppelt ist, dass die Taumelbewegung des Taumelkörpers in eine Drehung des Abtriebszahnrads überführt wird.

### HINTERGRUND DER ERFINDUNG

Getriebe der eingangs genannten Art zeichnen sich dadurch aus, dass eine Taumelbewegung eines treibenden Elements in eine Drehantriebsbewegung, z.B. einer Abtriebswelle, überführt wird. Derartige Getriebe sind aufgrund ihrer kompakten Bauweise und effizienten Drehmomentübertragung universell einsetzbar und finden beispielsweise im Kraftfahrzeugbau regelmäßig Verwendung. Sie eignet sich insbesondere für den Antrieb von Komponenten, die hohe Drehmomente und feine Verfahrwege benötigen. Lediglich beispielhaft seien in diesem Zusammenhang Stellantriebe und dergleichen genannt. Dabei werden unterschiedlichste Anforderungen an derartige Getriebe gestellt, insbesondere ein hoher Wirkungsgrad, kompakte Abmessungen, eine lange Lebensdauer und ein möglichst gleichmäßiger Abtrieb.

Aus der DE102008001491A1 ist ein Taumelradgetriebe besteht aus einem um eine Hauptachse drehbaren Antriebsglied, einem Übertragungsglied , welches drehbar um eine Taumelachse angeordnet ist, wobei die Taumelachse die Hauptachse unter einem Taumelwinkel (alpha) schneidet und mit dem Antriebsglied um die Hauptachse umläuft, sowie einem Abtriebsglied und einem Abstützglied. Zwischen dem Übertragungsglied und dem Abtriebsglied ist ein erstes Koppelmittel und zwischen dem Übertragungsglied und dem Abstützglied ein zweites Koppelmittel angeordnet, wobei mindestens eines der beiden Kopplungsmittel eine Verzahnungspaarung ist und wobei die Verzahnungen der als Koppelmittel dienenden Verzahnungspaarung als Stirnverzahnungen ausgebildet sind.

Aus der DE 822 460 B ist ein stufenloses Schaltgetriebe mit ei-ner Antriebswelle und einer Abtriebswelle, zwischen denen eine Freilaufkupplung angeordnet ist, deren treibendes Glied mit ei-ner Schwinge fest verbunden ist, bekannt. Die Schwinge ist mittels zweier Zapfen im Getriebegehäuse gelagert und wird mit-tels Gleitsteine in der Randnut einer Taumelscheibe geführt, so dass sie bei Umläufen der Taumelscheibe Schwingbewegungen in Achsrichtung der Antriebswelle und Abtriebswelle ausführen kann. Das getriebene Glied der Freilaufkupplung ist ein paral-lel zur Antriebsachse angeordnetes Kegelzahnrad, das entspre-chend der Schwingbewegung der Schwinge im Sinne der Triebwir-kung der Freilaufkupplung in Umdrehung versetzt wird. Das Ke-gelzahnrad wird in einem in der Wand des Getriebegehäuses befestigten Kugellager geführt und überträgt seine Drehbewegung auf ein mit der Abtriebswelle fest verbundenes Zahnrad.

Aus der IT VI0020110190 A ist eine mechanische Vorrichtung zur Geschwindigkeits- und Drehmomentänderung für Fahrzeuge bekannt. Auf einer Antriebswelle ist mittels eines als Drehpunkt wirken-den Zapfens ein Träger befestigt, der ein Lager trägt. Der In-nenring des Lagers ist in Bezug auf die Antriebswelle neigbar. An den Außenring des Lagers ist ein Träger gekoppelt. Der Trä-ger trägt über zwei Lager zwei leerlaufende Kegelritzel, die ihrerseits auf zwei zu den Ritzeln orthogonal und leerlaufend gelagerte Ritzel wirken. Die Ritzel wirken mit einem Kegelrit-zel zusammen. Das Kegelritzel ist auf der Abtriebswelle vorge-sehen, wobei ein Freilauf sicherstellt, dass das Kegelritzel nur in eine Richtung drehen kann.

Die vorliegende Erfindung hat sich der Aufgabe gestellt, ein Zahnradgetriebe der eingangs genannten Art dahingehend zu verbessern, das es sich durch eine kompakte und möglichst einfache Bauweise und durch einen hohen Wirkungsgrad auszeichnet.

### ZUSAMMENFASSUNG DER ERFINDUNG

Die der Erfindung zugrunde liegende Aufgabe wird durch ein Zahnradgetriebe mit den Merkmalen des Anspruchs 1 gelöst. Vorteilhafte Ausführungsformen der Erfindung sind Gegenstand der Unteransprüche.

Erfindungsgemäß umfasst das Zahnradgetriebe ein erstes Zahnrad und ein zweites Zahnrad, die jeweils drehend in dem Gehäuse gelagert und mit dem Abtriebszahnrad gekoppelt sind, beispielsweise mit dem Abtriebszahnrad kämmend in Eingriff stehen. Das erste und das zweite Zahnrad sind jeweils mit wenigstens einem Freilauf gekoppelt. Die Freiläufe sind jeweils derart ausgebildet, dass sie in einer Freilaufrichtung relativ zu dem jeweiligen ersten und zweiten Zahnrad drehbar sind und in einer Sperrrichtung gegen eine Drehbewegung relativ zu dem jeweiligen Zahnrad gesperrt sind, d.h., in der Sperrrichtung ist der Freilauf mit dem Zahnrad drehfest verbunden und kann eine Antriebskraft in das Zahnrad leiten.

Der Taumelkörper ist betriebsmäßig mit der Antriebswelle gekoppelt. Dazu ist auf der Antriebswelle eine Taumelscheibe vorgesehen, die wiederum in dem Taumelkörper drehbar gelagert ist, d.h., die Taumelscheibe kann in dem Taumelkörper rotieren. Als Lagerung kann insbesondere eine Wälzlageranordnung dienen, wobei der Innenring der Wälzlageranordnung an der Taumelscheibe, z.B. an deren Außenumfang, vorgesehen sein kann und der Außenring der Wälzlageranordnung an einer Innenseite des Taumelkörpers vorgesehen sein kann. Die Taumelscheibe ist derart mit der Antriebswelle drehfest verbunden, dass die Taumelscheibe zusammen mit der Antriebswelle um eine Taumelscheibendrehachse rotiert, wenn die Antriebswelle drehend angetrieben wird. Die Drehachse der Antriebswelle fällt mit der Drehachse der Taumelscheibe zusammen. Ein Neigungswinkel der Taumelscheibe relativ zur Taumelscheibendrehachse ist jedoch einstellbar, d.h. die Taumelscheibe ist um eine Achse quer zur Antriebswelle relativ zur Antriebswelle verschwenkbar. Wenn die Taumelscheibe relativ zur Taumelscheibendrehachse schräg gestellt wird, taumelt die Taumelscheibe bei drehender Antriebswelle um die Taumelscheibendrehachse. Über die Zwangsführung des Taumelkörpers auf der Taumelscheibe, d.h. über die Lagerung zwischen Taumelscheibe und Taumelkörper, wird der Taumelkörper in eine Taumelbewegung versetzt. Der Taumelkörper kann dabei, z.B. aufgrund notwendiger Toleranzen, in geringem Maße leichte Schwenkbewegungen bzw. Hin- und Herdrehbewegungen um die Taumelscheibendrehachse vollführen, er rotiert aber nicht wie die Taumelscheibe um die Taumelscheibendrehachse. Der Taumelkörper ist wiederum derart mit den Freiläufen gekoppelt, dass eine Taumelbewegung des Taumelkörpers in eine hin- und hergehende Drehbewegung der Freiläufe überführt wird. So wird eine in die Antriebswelle eingeleitete Antriebskraft von der Antriebswelle, der Taumelscheibe, dem Taumelkörper, den Freiläufen (bei Bewegung der Freiläufe in Sperrrichtung)und den ersten und zweiten Zahnrädern auf das Abtriebszahnrad übertragen. Das Zahnradgetriebe umfasst ferner Steuermittel zur Änderung des Neigungswinkels der Taumelscheibe bezüglich der Taumelscheibendrehachse.

Die Übersetzung des Zahnradgetriebes ist durch die Verstellbarkeit der Neigung der Taumelscheibe, und damit auch des Taumelkörpers einstellbar. Wenn die Taumelscheibe schräg gestellt ist, relativ zu dem Taumelkörper rotiert und eine Taumelbewegung ausführt, wird aufgrund der Führung der Taumelscheibe in dem Taumelkörper, d.h. aufgrund der drehbeweglichen Lagerung der Taumelscheibe in dem Taumelkörper, der Taumelkörper ebenfalls in eine eigene Taumelbewegung überführt, in der der Taumelkörper um mehrere Achsen vor- und zurückgekippt. Beispielsweise schwenkt der Taumelkörper vor- und zurück um zwei Achsen, die jeweils quer zur Taumelscheibendrehachse und zueinander stehen. Je schräger die Taumelscheibe und damit der Taumelkörper zur Taumelscheibendrehachse stehen, desto größer ist das Ausmaß der Taumelbewegung des Taumelkörpers und umso größer ist das Ausmaß der drehenden Hin- und Herbewegung der Freiläufe bzw. der rotatorische Versatz der ersten und zweiten Zahnräder pro Umdrehung der Taumelscheibe. Die Übersetzung ändert sich durch Veränderung der Neigung bzw. Schrägstellung der Taumelscheibe bzw. des Taumelkörpers zur Taumelscheibendrehachse.

Nach einer weiteren Ausführungsform der Erfindung ist vorgesehen, dass die Steuermittel dazu ausgebildet sind, einen Neigungswinkel der Taumelscheibe einzustellen, bei dem die Taumelscheibe bei drehender Antriebswelle keine Taumelbewegung ausführt. Wird die Stellung von Taumelscheibe und Taumelkörper so eingestellt, dass sie bei drehender Antriebswelle keine Taumelbewegung vollführen, d.h., wenn die Ebene, in der die Taumelscheibe dreht, senkrecht zur Drehachse der Antriebswelle liegt, werden die Freiläufe nicht betätigt und das erste und das zweite Zahnrad werden nicht angetrieben. Die Übersetzung ist in diesem Falle 0. Auf diese Weise kann ein Getriebe bereitgestellt werden, das zwischen einem festen Übersetzungswert in einer Übertragungsrichtung beliebig ins Langsame untersetzen kann, so dass sich die angetriebene Welle dreht, während die abgetriebene Welle steht. Dadurch können für viele Anwendungen Anfahrkupplungen und dergleichen entfallen.

Die Steuermittel können unmittelbar an dem Taumelkörper angreifen, um die Neigung von Taumelscheibe und Taumelkörper einzustellen. Alternativ können die Steuermittel unmittelbar an der Taumelscheibe angreifen. Die Steuermittel können mechanische, elektrische, pneumatische Antriebe, oder Kombinationen davon, zu Änderung des Neigungswinkels der Taumelscheibe umfassen.

Nach einer weiteren Ausführungsform der Erfindung können die Steuermittel zum stufenlosen Ändern des Neigungswinkels der Taumelscheibe ausgebildet sein. Auf diese Weise wird ein stufenloses Zahnradgetriebe (CVT) bereitgestellt.

Erfindungsgemäß umfassen die Freiläufe Zahnradfreiläufe. wobei das erste Zahnrad mit einem ersten Zahnradfreilauf und einem zweiten Zahnradfreilauf gekoppelt ist, wobei die ersten und zweiten Zahnradfreiläufe jeweils derart ausgebildet sind, dass sie in Freilaufrichtung relativ zu dem ersten Zahnrad drehbar sind und in Sperrrichtung gegen eine Drehbewegung relativ zu dem ersten Zahnrad gesperrt sind. Das zweite Zahnrad ist mit einem dritten Zahnradfreilauf und einem vierten Zahnradfreilauf gekoppelt, wobei die dritten und vierten Zahnradfreiläufe jeweils derart ausgebildet sind, dass sie in Freilaufrichtung relativ zu dem zweiten Zahnrad drehbar sind und in Sperrrichtung gegen eine Drehbewegung relativ zu dem zweiten Zahnrad gesperrt sind. Wenn die Zahnradfreiläufe in Sperrrichtung bewegt werden, können sie eine Antriebskraft von dem Taumelkörper in das jeweilige erste und zweite Zahnrad leiten. Der Taumelkörper weist eine Anzahl Zahnradsegmente auf, die jeweils mit einem der Zahnradfreiläufe der ersten und zweiten Zahnräder kämmen, so dass die Taumelbewegung des Taumelkörpers in eine hin- und hergehende Drehbewegung der Zahnradfreiläufe überführt und eine in die Antriebswelle eingeleitete Antriebskraft auf das Abtriebszahnrad übertragen wird.

Nach einer weiteren Ausführungsform der Erfindung können die Freiläufe mit Bezug auf den Taumelkörper derart angeordnet sein, dass die Antriebskraft phasenverschoben in das Abtriebszahnrad bzw. in das erste und das zweite Zahnrad eingeleitet wird. Dabei treiben die Freiläufe bei einer Umdrehung der Antriebswelle nicht durchgängig das jeweilige erste oder zweite Zahnrad an. Für jeden Freilauf findet die Antriebskraftübertragung von Freilauf in Zahnrad nur über einen Teil einer Umdrehung der Taumelscheibe statt. Außerdem geben die Freiläufe die Antriebskraft auch nicht gleichzeitig an das erste und zweite Zahnrad weiter. Wenn ein Freilauf bei einer Umdrehung der Taumelscheibe aus dem Sperrzustand in den Freilaufzustand überführt wird, ist ein anderer Freilauf in den Sperrzustand geschaltet und übernimmt die Übertragung der Antriebskraft in das jeweilige Zahnrad. Dadurch übernimmt jeder Freilauf einen Teil der Übertragung der Antriebskraft. Anders ausgedrückt, bei dieser Ausführungsform ist vorgesehen, dass die Freiläufe mit Bezug auf den Taumelkörper derart angeordnet sind, dass die einzelnen Freiläufe pro Umdrehung der Antriebswelle phasenverschoben in den Sperrzustand geschaltet werden, wenn der Taumelkörper bei drehender Antriebswelle eine Taumelbewegung vollführt. Eine weitere Ausführungsform der Erfindung sieht ferner vor, dass die ersten bis vierten Zahnradfreiläufe derart mit dem Taumelkörper gekoppelt sein können, dass die ersten bis vierten Zahnradfreiläufe pro Umdrehung der Taumelscheibe die Antriebskraft jeweils zeitlich versetzt, also phasenverschoben, auf das Abtriebszahnrad, bzw. das erste und das zweite Zahnrad übertragen. Anders ausgedrückt, bei dieser Ausführungsform ist vorgesehen, dass die Freiläufe mit Bezug auf den Taumelkörper und die Zahnradsegmente derart angeordnet sind, dass die einzelnen Freiläufe pro Umdrehung der Antriebswelle phasenverschoben in den Sperrzustand geschaltet werden, wenn der Taumelkörper bei drehender Antriebswelle eine Taumelbewegung vollführt.

Nach einer weiteren Ausführungsform der Erfindung kann der Taumelkörper vier Zahnradsegmente aufweisen, die an dem Taumelkörper fest angebracht oder integral, d.h. einstückig, mit dem Taumelkörper ausgebildet sind. Ein erstes Zahnradsegment an dem Taumelkörper kämmt mit dem ersten Zahnradfreilauf an dem ersten Zahnrad, ein zweites Zahnradsegment an dem Taumelkörper kämmt mit dem zweiten Zahnradfreilauf an dem ersten Zahnrad, ein drittes Zahnradsegment an dem Taumelkörper kämmt mit dem dritten Zahnradfreilauf an dem zweiten Zahnrad und ein viertes Zahnradsegment an dem Taumelkörper kämmt mit dem vierten Zahnradfreilauf an dem zweiten Zahnrad. Das erste und das dritte Zahnradsegment sind an einem ersten Ende des Taumelkörpers vorgesehen und das zweite und das vierte Zahnradelement sind an einem zweiten Ende, entgegengesetzt zum ersten Ende, des Taumelkörpers angeordnet. Das erste und das zweite Ende des Taumelkörpers beziehen sich hierbei auf Enden des Taumelkörpers in einer Richtung quer zur Taumelscheibendrehachse. Das heißt, in einer Richtung quer zur Taumelscheibendrehachse sind die Zahnradsegmente auf entgegengesetzten Seiten des Taumelkörpers angeordnet. Dies ermöglicht eine kompakte Bauweise, da auch die Freiläufe entsprechend angeordnet sein können und wenig Platzbedarf für deren Installation am ersten und zweiten Zahnrad besteht. Die Anordnung der Segmente an entgegengesetzten Enden des Taumelkörpers folgt insbesondere der Taumelbewegung des Taumelkörpers um mehrere Achsen und trägt dazu bei, dass die Zahnradfreiläufe nacheinander über die Zahnradsegmente betätigt werden, d.h., dass die einzelnen über die Zahnradfreiläufe übertragenen Antriebskräfte phasenverschoben in das Abtriebszahnrad eingeleitet werden. Durch die Taumelbewegung des Taumelkörpers werden die einzelnen Zahnradfreiläufe periodisch in Sperrrichtung und in Freilaufrichtung gedreht, so dass die Taumelbewegung des Taumelkörpers in eine Drehbewegung der ersten und zweiten Zahnräder übertragen wird.

Nach einer weiteren Ausführungsform der Erfindung können jeweils zwei Zahnradsegmente einstückig ausgebildet sein. Die zwei Zahnradsegmente können z.B. an einem Bauteil ausgebildet sein, das an dem Taumelkörper angebracht ist. Ein solches Bauteil kann z.B. ein Zahnrad oder ein Teil eines Zahnrads sein.

Nach einer weiteren Ausführungsform sind die Drehachsen des ersten Zahnrads und des zweiten Zahnrads quer zur Taumelscheibendrehachse angeordnet. Dies garantiert eine kompakte Bauweise und trägt zur zeitlich versetzten Übertragung der Antriebskraft über die Freiläufe bei.

Nach einer weiteren Ausführungsform der Erfindung können die Steuermittel ein oder mehrere Linearstelleinheiten mit axial verfahrbarem Stellglied umfassen. Vorzugsweise umfassen die Linearstelleinheiten eine oder mehrere Spindeltriebeinheiten. Ein Spindeltrieb umfasst eine Spindel mit einem Außengewinde und einem darauf angeordneten Stellglied mit einem Innengewinde, das mit dem Außengewinde der Spindel in Eingriff steht, wobei durch relatives Verdrehen der Spindel in dem Stellglied eine Verschiebung des Stellglieds entlang der Spindel erfolgt.

Nach einer weiteren Ausführungsform der Erfindung können die eine oder die mehreren Linearstelleinheiten zumindest teilweise innerhalb der Antriebswelle angeordnet sein. So können eine oder mehrere Spindeln sich durch die Antriebswelle erstrecken, die eine entsprechende Ausnehmung aufweist. Mehrere Linearstelleinheiten, vorzugsweise in Richtung der Taumelscheibendrehachse oder der Drehachse der Antriebswelle auf entgegengesetzten Seiten der Taumelscheibe angeordnet, können eine gemeinsame Spindel aufweisen. Die Spindel kann insbesondere zwei gegenläufige Gewindeabschnitte aufweisen, eine mit Rechtsgewinde, eine mit Linksgewinde, so dass durch Drehung der Spindel in eine Richtung, zwei auf den unterschiedlich ausgebildeten Gewindeabschnitten angeordnete Stellglieder in entgegengesetzte Richtungen verfahren werden. Der Antrieb der Spindel kann durch die Antriebswelle hindurch erfolgen. Beispielsweise kann der Spindelantrieb einen elektrischen Antrieb umfassen, der zumindest teilweise innerhalb der Antriebswelle verbaut sein kann.

Nach einer weiteren Ausführungsform der Erfindung können das Stellglied oder die Stellglieder einer oder mehrerer Linearstelleinheiten auf oder in der Antriebswelle relativ zur Antriebswelle drehfest aber axial entlang der Rotationsachse der Antriebswelle verfahrbar geführt sein. Zu diesem Zwecke kann die Antriebswelle einen Führungsabschnitt aufweisen, der eine Drehbewegung des Stellglieds relativ zur Antriebswelle verhindert, jedoch eine axiale Verschiebung des Stellglieds entlang der Drehachse der Antriebswelle erlaubt. Die Spindel kann sich hierbei durch die Antriebswelle erstrecken, die eine entsprechende Durchführung für die Spindel aufweist. Die Spindel und das Stellglied werden im Betrieb zusammen mit der Antriebswelle und der Taumelscheibe um die Taumelscheibendrehachse gedreht. Eine relative Drehung von Spindel und Antriebswelle erfolgt lediglich, um die Neigung der Taumelscheibe einzustellen.

Nach einer weiteren Ausführungsform der Erfindung können die einen oder die mehreren Linearstelleinheiten jeweils einen oder mehrere Gelenkarme umfassen, die das Stellglied und die Taumelscheibe zur Einstellung der Neigung der Taumelscheibe verbinden. Gelenkarme sind Verbindungen zwischen Stellglied und Taumelscheibe. Sie können sich durch einen zusätzlichen gelenkigen Abschnitt, der zwei Teile des Gelenkarms miteinander verbindet, auszeichnen.

Nach einer weiteren Ausführungsform der Erfindung können mehrere Stellglieder entlang der Taumelscheibendrehachse auf entgegengesetzten Seiten der Taumelscheibe angeordnet sein, wobei die Stellglieder und die zugehörigen Gelenkarme auf den entgegengesetzten Seiten der Taumelscheibe mit Bezug auf das Schwenkzentrum der Taumelscheibe symmetrisch angeordnet sind.

Das heißt, die Gelenkarme liegen sich mit Bezug auf das Schwenkzentrum der Taumelscheibe diametral gegenüber. Durch diese Anordnung sind die Gelenkarme nicht nur auf unterschiedlichen Seiten der Taumelscheibe angeordnet, sondern in einer Richtung quer zur Taumelscheibendrehachse auch auf unterschiedlichen Seiten der Taumelscheibendrehachse. Durch die symmetrische Anordnung der Gelenkarme und entsprechend der Stellglieder wird eine gleichmäßige Gewichtsverteilung der Steuermittel auf der rotierenden Antriebswelle erreicht.

Gemäß einer weiteren Ausführungsform der Erfindung können die Steuermittel eine Linearstelleinheit mit einem koaxial oder parallel zur Antriebswelle verfahrbaren Stellglied umfassen. Das Stellglied ist an der Außenseite des Gehäuses angeordnet. Das Stellglied ist durch die Wand des Gehäuses hindurch mit dem einen oder den mehreren Gelenkarmen gekoppelt. Das Stellglied ist auf einer Spindel angeordnet, die außerhalb des Gehäuses angeordnet ist. Der Antrieb der Spindel kann über eine an der Außenseite des Gehäuses angeordnete Antriebsquelle, z.B. einen Elektromotor erfolgen. Der Antrieb des Stellglieds kann so in einfacher Weise von dem Antrieb der Antriebswelle getrennt werden, was einen einfachen Aufbau und eine einfache Wartung garantiert. Das Stellglied kann auf der Antriebswelle axial geführt sein, wenn sich diese zur Außenseite des Gehäuses hin erstreckt. Alternativ oder zusätzlich kann das Element an der Außenseite des Gehäuses axial geführt sein.

### FIGURENBESCHREIBUNG

Die Erfindung wird im Folgenden anhand von Ausführungsbeispielen näher erläutert. Es zeigen:
- Fig. 1: ein stufenloses Zahnradgetriebe nach einer ersten Ausführungsform der Erfindung;
- Fig. 2: Teile des Zahnradgetriebes aus Figur 1;
- Fig. 3: Teile des Zahnradgetriebes aus Figur 1;
- Fig. 4: Teile des Zahnradgetriebes aus Figur 1;
- Fig. 5: Teile des Zahnradgetriebes aus Figur 1;
- Fig. 6: das Zahnradgetriebe aus Fig. 1 in einer A-A Schnittansicht;
- Fig. 7: Teile des Zahnradgetriebes aus Figur 1 in einer Schnittansicht;
- Fig. 8: ein stufenloses Zahnradgetriebe nach einer weiteren Ausführungsform der Erfindung; und
- Fig. 9: ein stufenloses Zahnradgetriebe nach einer weiteren Ausführungsform der Erfindung.

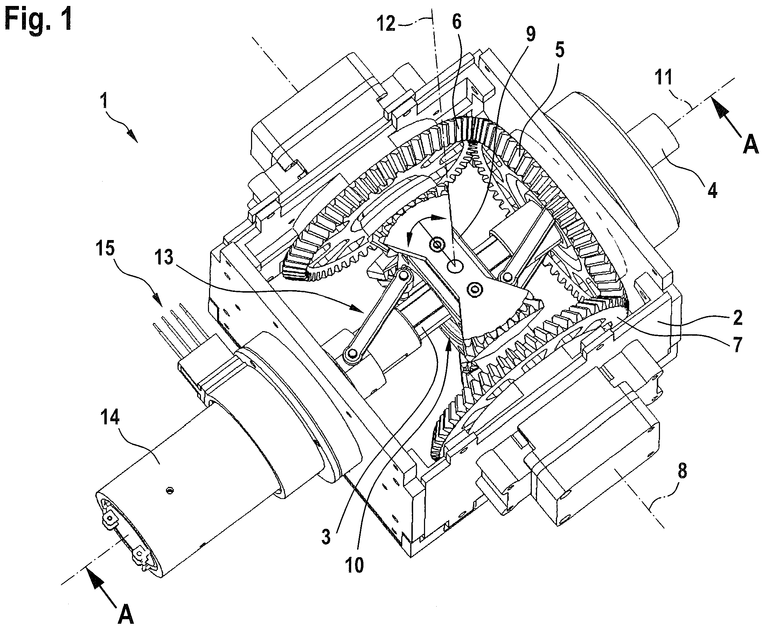

Figur 1 zeigt ein Zahnradgetriebe 1 nach einer ersten Ausführungsform der Erfindung. Das Zahnradgetriebe 1 umfasst ein Gehäuse 2 mit einer Antriebswelle 3, die drehbar in dem Gehäuse gelagert ist. Teile des Gehäuses 2 sind entfernt, um den inneren Aufbau des Zahnradgetriebes sichtbar zu machen. Ferner umfasst das Zahnradgetriebe eine Abtriebswelle 4, die ebenfalls drehbar in dem Gehäuse 2 gelagert ist und die mit einem Abtriebszahnrad 5 fest verbunden ist.

Ein erstes Zahnrad 6 und ein zweites Zahnrad 7 sind auf gegenüberliegenden Innenseiten des Gehäuses vorgesehen und in dem Gehäuse 2 drehend gelagert. Das erste Zahnrad 6 und das zweite Zahnrad 7 sind mit Bezug auf ihre Drehachsen 8 koaxial angeordnet und kämmen jeweils mit dem Abtriebszahnrad 5. Die Drehachsen des ersten und des zweiten Zahnrads 6, 7 sind quer zu der Drehachse der Antriebswelle 3 angeordnet.

Die Antriebswelle 3 und das Abtriebszahnrad 5 sind über die ersten und zweiten Zahnräder 6 und 7 betriebsmäßig über einen Getriebemechanismus gekoppelt. Der Getriebemechanismus umfasst einen im Wesentlichen rechteckigen Taumelkörper 9 und eine darin angeordnete Taumelscheibe 10. Die Antriebswelle 3 erstreckt sich entlang einer als Taumelscheibendrehachse 11 bezeichneten Achse. Die Taumelscheibe 10 ist in Bezug auf Taumelscheibendrehachse 11 drehfest auf der Antriebswelle 3 montiert und rotiert mit der Antriebswelle 3 um die Taumelscheibendrehachse 11, d.h. die Drehachse der Antriebswelle fällt mit der Taumelscheibendrehachse 11 zusammen, und die Taumelscheibe 10 kann um die Taumelscheibendrehachse 11 nicht relativ zur Antriebswelle 3 verdrehen. In einer Richtung quer zur Taumelscheibendrehachse 11 kann die Taumelscheibe 10 jedoch geneigt werden, hier um die Neigungsachse 12, d.h. die Taumelscheibe 10 kann relativ zur Antriebswelle 3 bzw. zur Taumelscheibendrehachse 11 gekippt werden, was durch einen gebogenen Doppelpfeil angedeutet ist.

Um die Neigung der Taumelscheibe 10 um die Neigungsachse 12 relativ zur Taumelscheibendrehachse 11 einzustellen, sind Stell-, bzw. Steuermittel 13 vorgesehen.

Die Antriebswelle 3 kann über beliebige Antriebsquellen angetrieben werden. Bei der hier dargestellten Ausführungsform die die Antriebswelle 3 mit einem Elektromotor 14 gekoppelt. Die Steuermittel 13 werden ebenfalls elektrisch angetrieben. Hierfür sind Anschlüsse 15 vorgesehen.

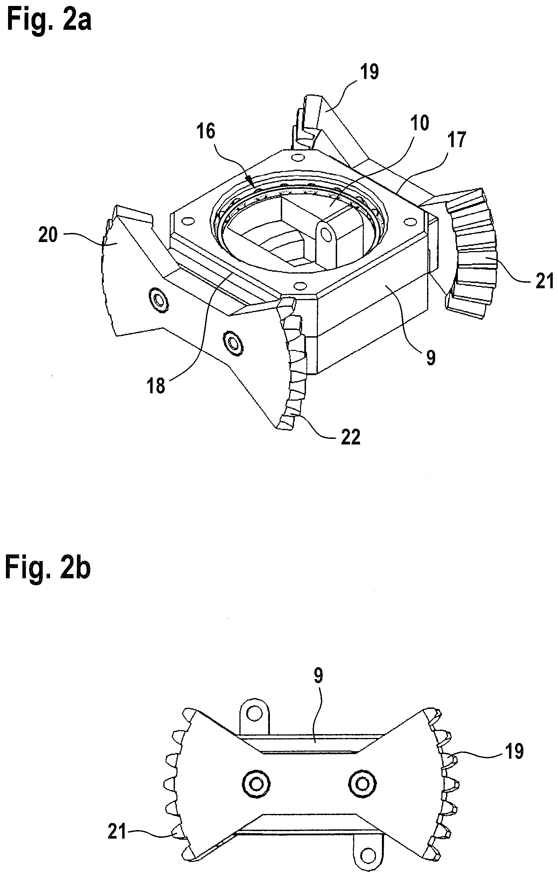

Figur 2 zeigt in den Darstellung a) und b) den Taumelkörper 9 aus Figur 1. Innerhalb des Taumelkörpers 9 ist die Taumelscheibe 10 mittels einer Wälzlageranordnung 16 drehbar gelagert. Die Taumelscheibe 10 ist auf der Antriebswelle montiert und trägt den Taumelkörper 9. Aufgrund der Wälzlageranordnung 16 wird der Taumelkörper 9 zusammen mit der Taumelscheibe 10 gekippt, wenn die Neigung der Taumelscheibe 10 auf der Antriebswelle geändert wird.

Der Taumelkörper 9 ist von quaderförmiger Struktur und weist an zwei entgegengesetzten Enden 17, 18 eine Anzahl Zahnradsegmente 19, 20, 21, 22 auf. Ein erstes Zahnradsegment 19 und ein drittes Zahnradsegment 21 sind an dem ersten Ende 17 des Taumelkörpers 9 dreh- und verschiebefest angebracht und erstecken sich in entgegengesetzte Richtung. Das erste Zahnradsegment 19 und das dritte Zahnradsegment 21 sind einstückig ausgebildet. Ein zweites Zahnradsegment 20 und ein viertes Zahnradsegment 22 sind an dem zweiten Ende 18 des Taumelkörpers 9 dreh- und verschiebefest angebracht und erstecken sich in entgegengesetzte Richtung. Das zweite Zahnradsegment 20 und das vierte Zahnradsegment 22 sind ebenfalls einstückig ausgebildet.

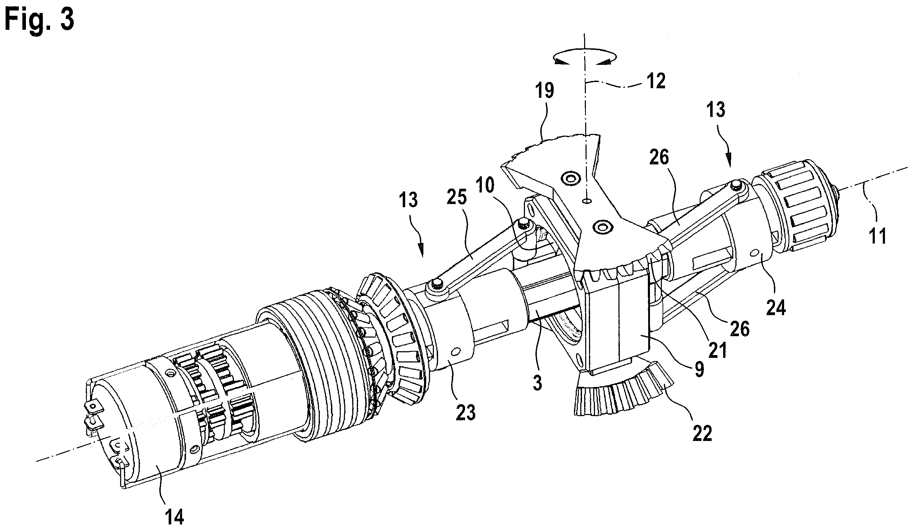

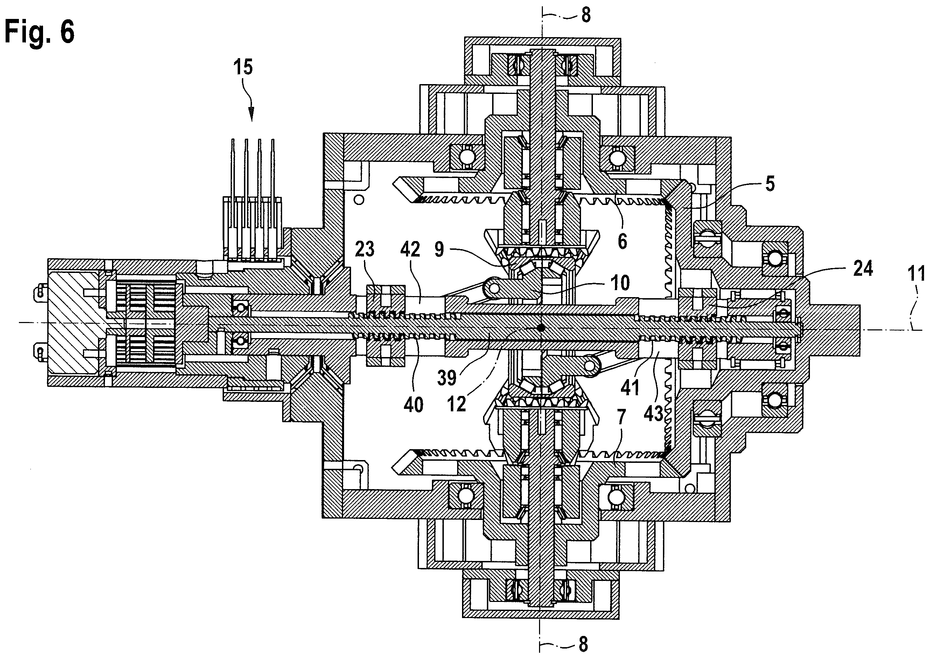

Figur 3 zeigt die Anordnung des Zusammenbaus von Taumelkörper 9 und Taumelscheibe 10 auf der Antriebswelle 3. Die Taumelscheibe 10 ist auf der Antriebswelle 3 montiert und trägt den Taumelkörper 9 über die mit Bezug auf die Figur 2 erläuterte Wälzlageranordnung. Um die Taumelscheibe 10 in Bezug auf die Taumelscheibendrehachse 11 um die Neigungsachse 12 zu verschwenken, sind Steuermittel 13 vorgesehen. Diese umfassen Linearstelleinheiten mit einer Spindel, die innerhalb der Antriebswelle 3 angeordnet ist. Die Spindel ist in der Schnittansicht des Getriebes in der Figur 6 dargestellt. Auf der Antriebswelle 3 sind auf entgegengesetzten Seiten des Taumelkörpers 9 zwei Stellglieder 23 und 24 angeordnet. Die Stellglieder 23, 24 sind in entlang der Taumelscheibendrehachse 11 verlaufenden axialen Durchführung der Antriebswelle 3 axial geführt und damit rotatorisch an der Antriebswelle 3 festgelegt, wobei die Stellglieder 23, 24 jedoch in Richtung der Taumelscheibendrehachse 11 axial verfahren werden können. Die Stellglieder 23, 24 sind jeweils mit Gelenkarmen 25, 26 verbunden. Die Gelenkarme 25, 26 koppeln das jeweilige Stellglied 23, 24 mit der Taumelscheibe 10. Durch axiales Verfahren der Stellglieder 23, 24 relativ zu der Antriebswelle 3 entlang der Taumelscheibendrehachse 11 wird die Taumelscheibe 10 um die Neigungsachse 12 in Bezug auf Taumelscheibendrehachse 11 geneigt (angedeutet durch gebogenen Doppelpfeil). Aufgrund der Lagerung zwischen der Taumelscheibe 10 und dem Taumelkörper 9 wird diese Neigung auf den Taumelkörper 9 übertragen, der ebenfalls schräg gestellt wird.

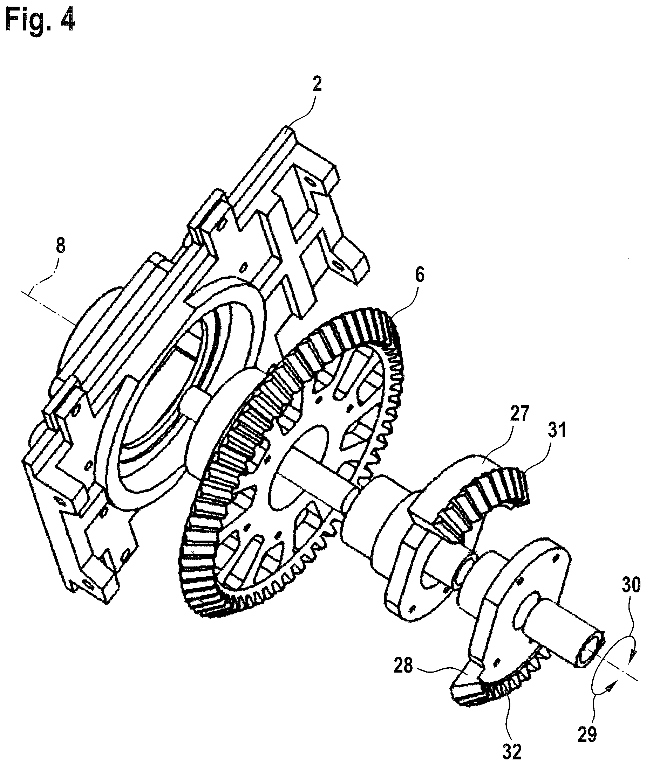

Figur 4 zeigt Teile des Zahnradgetriebes aus der Figur 1 in einer Explosionsdarstellung. Figur 4 zeigt das in dem Gehäuse 2 um die Drehachse 8 drehbar gelagerte erste Zahnrad 6, das eine Schrägverzahnung zum Eingriff mit dem Abtriebszahnrad aufweist. An dem ersten Zahnrad 6 sind zwei Freiläufe in Form eines ersten Zahnradfreilaufs 27 und eines zweiten Zahnradfreilaufs 28 angebracht. Die Zahnradfreiläufe 27 und 28 weisen um die Drehachse 8 eine Sperrrichtung 29 und eine Freilaufrichtung 30 auf. Drehen die Zahnradfreiläufe 27 und 28 in Freilaufrichtung 30, können die Zahnradfreiläufe 27 und 28 relativ zu dem ersten Zahnrad 6 drehen. In Sperrrichtung 29 sind die Zahnradfreiläufe 27 und 28 dagegen gegen relatives Verdrehen zum ersten Zahnrad 6 gesperrt. Wenn ein Zahnradfreilauf in Sperrrichtung um die Achse 8 geschwenkt wird, kann diese Drehbewegung auf das erste Zahnrad 6 übertragen werden. Die Zahnradfreiläufe 28, 27 weisen jeweils eine Verzahnung 31, 32 auf. Die Verzahnung 31 des ersten Zahnradfreilaufs 27 steht in Eingriff mit dem ersten Zahnradsegment 19 des Taumelkörpers 9 (Figur 2). Die Verzahnung 32 des zweiten Zahnradfreilaufs 28 steht in Eingriff mit dem zweiten Zahnradsegment 20 auf der anderen Seite des Taumelkörpers 9 (Figur 2).

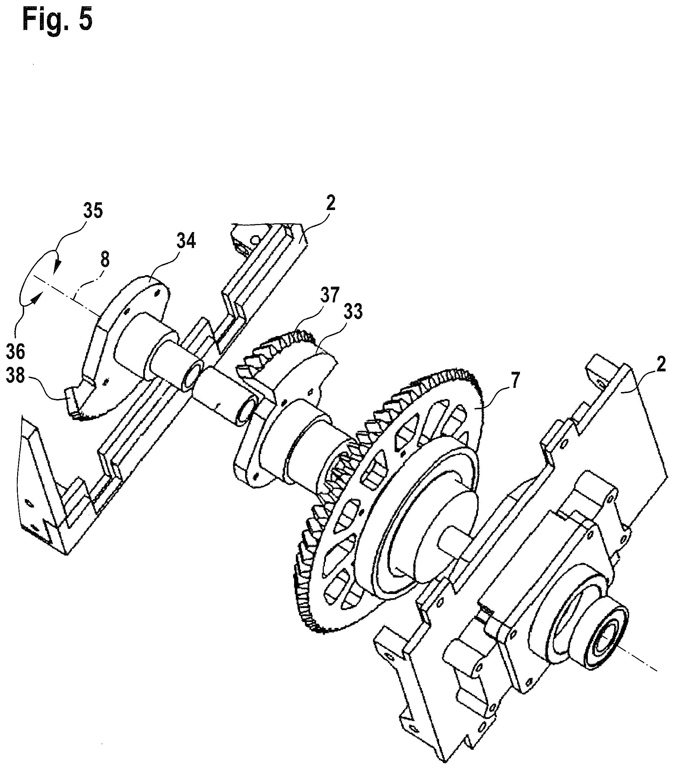

Figur 5 zeigt Teile des Zahnradgetriebes aus der Figur 1 in einer Explosionsdarstellung. Figur 5 zeigt das in dem Gehäuse 2 um die Drehachse 8 drehbar gelagerte zweite Zahnrad 7, das eine Schrägverzahnung zum Eingriff mit dem Abtriebszahnrad aufweist. An dem zweiten Zahnrad 7 sind zwei Freiläufe in Form eines dritten Zahnradfreilaufs 33 und eines vierten Zahnradfreilaufs 34 angebracht. Die Zahnradfreiläufe 33 und 34 weisen um die Drehachse 8 eine Sperrrichtung 35 und eine Freilaufrichtung 36 auf. Drehen die Zahnradfreiläufe 33 und 34 in Freilaufrichtung 36, können die Zahnradfreiläufe 33 und 34 relativ zu dem zweiten Zahnrad 7 drehen. In Sperrrichtung 35 sind die Zahnradfreiläufe 33 und 34 dagegen gegen relatives Verdrehen zum zweiten Zahnrad 7 gesperrt. Wenn ein Zahnradfreilauf in Sperrrichtung um die Achse 8 geschwenkt wird, kann diese Drehbewegung auf das zweite Zahnrad 7 übertragen werden. Die Zahnradfreiläufe 33, 34 weisen jeweils eine Verzahnung 37, 38 auf. Die Verzahnung 37 des dritten Zahnradfreilaufs 37 steht in Eingriff mit dem dritten Zahnradsegment 21 des Taumelkörpers 9 (Figur 2). Die Verzahnung 38 des vierten Zahnradfreilaufs 34 steht in Eingriff mit dem vierten Zahnradsegment 22 auf der anderen Seite des Taumelkörpers 9 (Figur 2).

Werden die ersten und zweiten Zahnräder 6, 7 jeweils in Sperrrichtung ihrer Zahnradfreiläufe angetrieben, wird diese Antriebskraft auf das Abtriebszahnrad übertragen. Aufgrund der gegensinnigen Anordnung der Sperrrichtungen zwischen erstem und zweitem Zahnrad, wird das Abtriebszahnrad immer in eine Drehrichtung angetrieben.

Figur 6 zeigt in einer Schnittansicht A-A das Zahnradgetriebe aus der Figur 1. Die Antriebswelle 3 erstreckt sich entlang der Taumelscheibendrehachse 11. Auf der Antriebswelle 3 ist die Taumelscheibe 10 montiert und trägt den Taumelkörper 9. Die Taumelscheibe 10 rotiert zusammen mit der Antriebswelle 3 um die Taumelscheibendrehachse 11 und kann um die Neigungsachse 12 geschwenkt werden.

Innerhalb der Antriebswelle 3 ist eine Spindel 39 angeordnet, die im Betrieb bei drehender Antriebswelle 3 zusammen mit der Antriebswelle 3 rotiert. Die Spindel 39 weist auf entgegengesetzten Seiten des Taumelkörpers 9 zwei Gewindeabschnitte 40, 41 mit gegenläufigen Gewinden auf. Auf den Gewindeabschnitten 40, 41 sind die Stellglieder 23, 24 montiert. Die Stellglieder 23, 24 sind in Axialführungen 42, 43 der Antriebselle axial geführt. Die Spindel 39 ist mit dem elektrischen Antrieb 15 für die Steuermittel gekoppelt, um die Spindel 39 relativ zur Antriebswelle 3 zu drehen und die axiale Position der Stellglieder 23, 24 entlang der Taumelscheibendrehachse einzustellen.

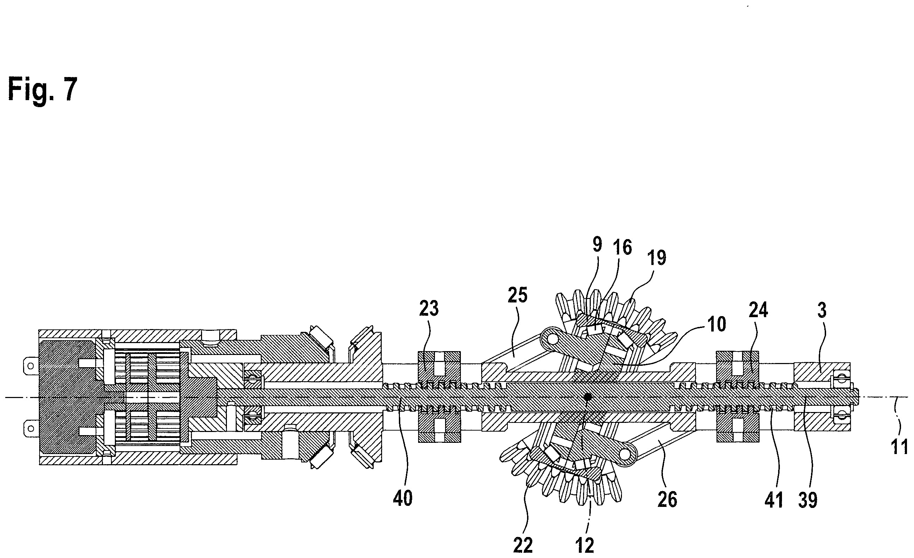

Figur 7 zeigt die Funktionsweise der Steuermittel. Wird die Spindel 39 relativ zur Antriebswelle 3 in eine bestimmte Richtung gedreht, werden die Stellglieder 23, 24 aufgrund der gegenläufigen Gewindeabschnitte 40, 41 in entgegengesetzte Richtung entlang der Taumelscheibendrehachse 11, hier aufeinander zu, bewegt. Über die Gelenkarme 25 und 26 wird die Taumelscheibe 10 um die Neigungsachse 12 gekippt und überträgt diese Kippbewegung über die Wälzlageranordnung 16 auf den Taumelkörper 9. Die Einstellung der axialen Position der Stellglieder 23, 24 erfolgt stufenlos und kann während des Betriebs, d.h. bei drehender Antriebswelle, erfolgen. Die Taumelscheibe 10 kann zwischen einer nicht-geneigten Stellung, in der die Taumelscheibenebene im Wesentlichen senkrecht zur Taumelscheibendrehachse 11 steht (wie in Figur 6 gezeigt), und einer geneigten Stellung (wie in Figur 7 gezeigt), verschwenkt werden.

Wird die Antriebswelle in der Figur 7 um die Taumelscheibendrehachse 11 rotiert, dann wird diese Rotation auf die Taumelscheibe 10 übertragen. Auf Grund ihrer Schrägstellung vollführt die Taumelscheibe 10 dabei eine räumliche Taumelbewegung. Bei dieser Taumelbewegung rotiert die Taumelscheibe 10 relativ zu dem Taumelkörper 9. Aufgrund der Wälzlagerführung 16 wird der Taumelkörper 9 zu einer eigenen Taumelbewegung um zwei Achsen, die senkrecht zur Taumelscheibendrehachse 11 und zueinander stehen, angeregt. Da die Zahnradsegmente fest mit dem Taumelkörper 9 verbunden sind, führen auch diese eine entsprechende Taumelbewegung aus. Zu deren Taumelbewegung gehört, dass die Zahnradsegmente 19, 20, 21, 22 in den Eckpositionen des Taumelkörpers 9 in Richtung der Taumelscheibendrehachse 11 vor und zurück verfahren. Diese Bewegung wird über den Eingriff mit den Zahnradfreiläufen auf die Zahnradfreiläufe der ersten und zweiten Zahnräder übertragen, die während der Taumelbewegungen des Taumelkörpers 9 eine hin- und hergehende Drehbewegung um die Drehachse 8 vollführen. Wenn die Zahnradfreiläufe jeweils in Sperrrichtung gedreht werden, wird diese Bewegung auf das jeweilige Zahnrad übertragen.

Aufgrund der Taumelbewegung des Taumelkörpers werden die ersten bis vierten Zahnradfreiläufe nicht gleichzeitig sondern zeitlich versetzt (phasenverschoben) in Sperrrichtung bewegt. Dadurch wird die Antriebskraft nacheinander über die Zahnradfreiläufe in das Abtriebszahnrad übertragen.

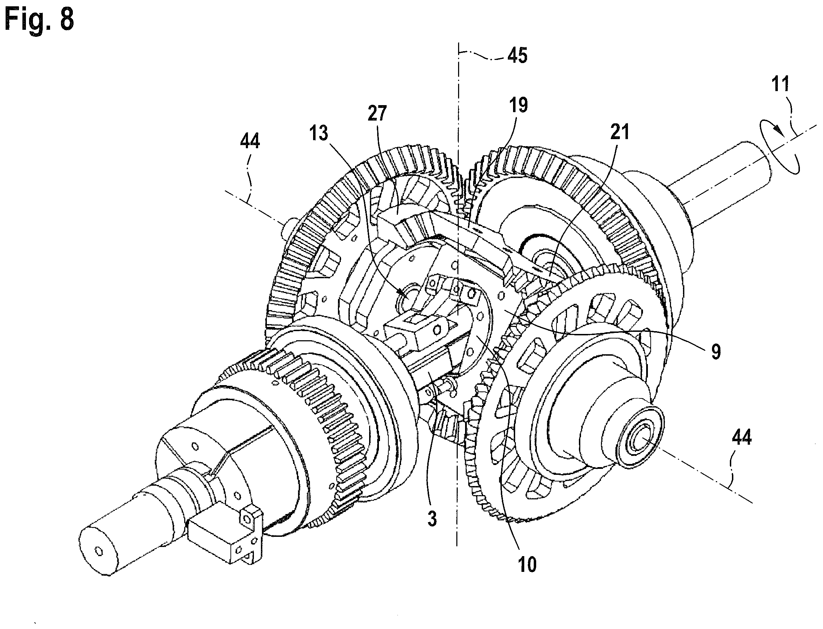

Figur 8 zeigt eine Taumelstellung des Taumelkörpers anhand einer modifizierten Ausführungsform des Zahnradgetriebes. Die Taumelbewegung des Taumelkörpers 9 erfolgt nach dem gleichen Prinzip wie in Bezug auf Figur 7 erläutert. Die Taumelscheibe 10 ist über Steuermittel 13 schräg in Bezug auf die Taumelscheibendrehachse 11 gestellt. Die Antriebswelle 3 rotiert um die Taumelscheibendrehachse 11. Der Taumelkörper 9 wird dadurch in eine taumelnde Bewegung versetzt und schwenkt um eine erste Achse 44 und eine zweite Achse 45, die senkrecht zueinander und senkrecht zur Taumelscheibendrehachse 11 stehen, vor und zurück. Figur 8 zeigt den Taumelkörper 9 in einer Position, in der der Taumelkörper 9 um beide Achsen 44, 45 leicht verschwenkt ist. Die Taumelbewegung wird über die Zahnradsegmente (hier 19 und 21 gezeigt) auf die jeweiligen Freiläufe übertragen, die vor- und zurück schwenken und in Sperrrichtung das jeweilige erste und zweite Zahnrad antreiben. Das Abtriebszahnrad führt so eine durchgehende Drehbewegung in eine Richtung aus.

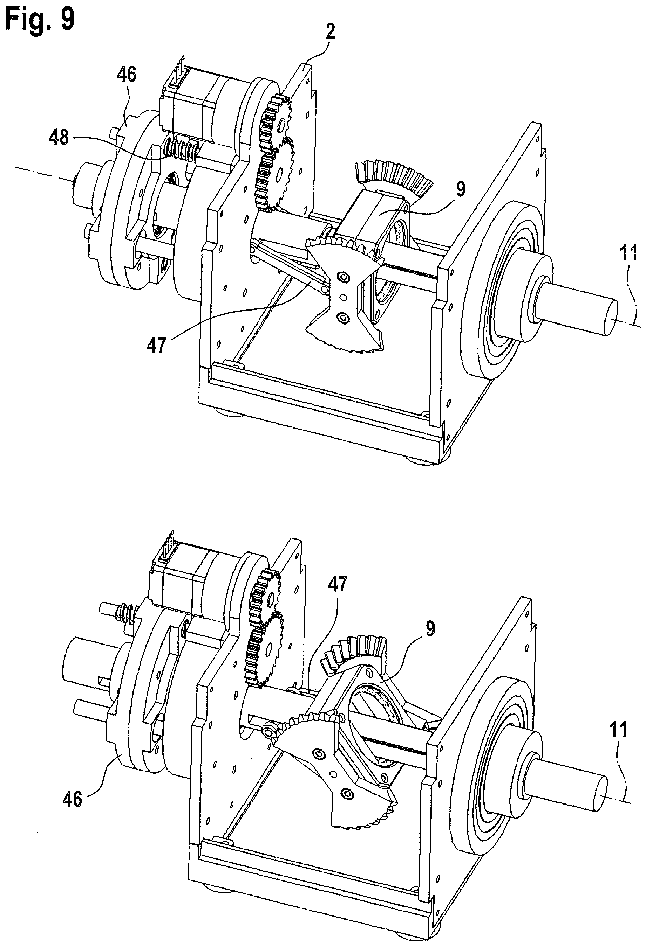

Figur 9 zeigt ein Zahnradgetriebe nach einer weiteren Ausführungsform der Erfindung in zwei Darstellungen. Die Linearstelleinheit umfasst hierbei ein, wahlweise auch mehrere, Stellglieder 46. Das Stellglied 46 ist außenseitig des Gehäuses 2 angeordnet und durch die Wandung des Gehäuses hindurch mit Gelenkarmen 47 verbunden. Ein Steuermittelantrieb mit einer Spindel 48 ist ebenfalls an der Außenseite des Gehäuses 2 angeordnet. Durch axiales Verfahren des Stellglieds 46 in Richtung der Taumelscheibendrehachse 11 wird das Stellglied 46 axial verfahren (Figur 9b). Über den Gelenkarm 47 wird der Taumelkörper in seiner Neigung eingestellt.

### Bezugszeichenliste

- 1: Zahnradgetriebe
- 2: Gehäuse
- 3: Antriebswelle
- 4: Abtriebswelle
- 5: Abtriebszahnrad
- 6: erstes Zahnrad
- 7: zweites Zahnrad
- 8: Drehachse erstes und zweites Zahnrad
- 9: Taumelkörper
- 10: Taumelscheibe
- 11: Taumelscheibendrehachse
- 12: Neigungsachse
- 13: Steuermittel
- 14: Elektromotor
- 15: Anschlüsse für Steuermittelantrieb
- 16: Wälzlageranordnung
- 17: erstes Ende des Taumelkörpers
- 18: zweites Ende des Taumelkörpers
- 19: erstes Zahnradsegment
- 20: zweites Zahnradsegment
- 21: drittes Zahnradsegment
- 22: viertes Zahnradsegment
- 23: Stellglied
- 24: Stellglied
- 25: Gelenkarm
- 26: Gelenkarm
- 27: erster Zahnradfreilauf
- 28: zweiter Zahnradfreilauf
- 29: Sperrrichtung
- 30: Freilaufrichtung
- 31: Verzahnung erster Zahnradfreilauf
- 32: Verzahnung zweiter Zahnradfreilauf
- 33: dritter Zahnradfreilauf
- 34: vierter Zahnradfreilauf
- 35: Sperrrichtung
- 36: Freilaufrichtung
- 37: Verzahnung dritter Zahnradfreilauf
- 38: Verzahnung vierter Zahnradfreilauf
- 39: Spindel
- 40: Gewindeabschnitt
- 41: Gewindeabschnitt
- 42: Axialführung
- 43: Axialführung
- 44: erste Achse
- 45: zweite Achse
- 46: Stellglied
- 47: Gelenkarme
- 48: Spindel

## Patentansprüche

1. Zahnradgetriebe (1), umfassend:
ein Gehäuse (2);
eine Antriebswelle (3), die drehbar in dem Gehäuse (2) gelagert ist;
ein Abtriebszahnrad (5), das drehbar in dem Gehäuse (2) gelagert ist;
einen Getriebemechanismus, der die Antriebswelle (3) und das Abtriebszahnrad (5) betriebsmäßig koppelt, wobei der Getriebemechanismus einen Taumelkörper (9) umfasst, der zwischen Antriebswelle (3) und Abtriebszahnrad (5) angeordnet ist und der dazu ausgebildet ist, bei Drehung der Antriebswelle (3) eine Taumelbewegung auszuführen, wobei der Taumelköper (9) mit dem Abtriebszahnrad (5) derart gekoppelt ist, dass die Taumelbewegung des Taumelkörpers (9) in eine Drehung des Abtriebszahnrads (5) überführt wird,
ein erstes Zahnrad (6) und ein zweites Zahnrad (7), die jeweils drehend in dem Gehäuse (2) gelagert und mit dem Abtriebszahnrad (5) gekoppelt sind,
wobei das erste Zahnrad (6) und das zweite Zahnrad (7) jeweils mit wenigstens einem Freilauf (27, 28, 33, 34) gekoppelt sind, wobei die Freiläufe (27, 28, 33, 34) derart ausgebildet sind, dass sie in einer Freilaufrichtung (30, 36) relativ zu dem jeweiligen ersten und zweiten Zahnrad (6, 7) drehbar sind und in einer Sperrrichtung (29, 35) gegen eine Drehbewegung relativ zu dem jeweiligen Zahnrad (6, 7) gesperrt sind;
eine auf der Antriebswelle (3) angeordnete Taumelscheibe (10), die den Taumelkörper (9) trägt, wobei die Taumelscheibe (10) in dem Taumelkörper (9) drehbar gelagert ist und wobei die Taumelscheibe (10) derart mit der Antriebswelle (3) drehfest verbunden ist, dass die Taumelscheibe (10) mit der Antriebswelle (3) um eine Taumelscheibendrehachse (11) rotiert, wobei ein Neigungswinkel der Taumelscheibe (10) relativ zur Taumelscheibendrehachse (11) einstellbar ist, um die Taumelscheibe (10) bei drehender Antriebswelle (3) mit Bezug auf die Taumelscheibendrehachse (11) in eine Taumelbewegung zu versetzen und über die Lagerung (16) der Taumelscheibe (10) in dem Taumelkörper (9) eine Taumelbewegung des Taumelkörpers (9) zu verursachen,
wobei der Taumelkörper (9) derart mit den Freiläufen (27, 28, 33, 34) gekoppelt ist, dass eine Taumelbewegung des Taumelkörpers (9) in eine hin- und hergehende Drehbewegung der Freiläufe (27, 28, 33, 34) überführt und eine in die Antriebswelle (3) eingeleitete Antriebskraft auf das Abtriebszahnrad (5) übertragen wird,
wobei ferner Steuermittel (13) zur Änderung des Neigungswinkels der Taumelscheibe (10) bezüglich der Taumelscheibendrehachse (11) vorgesehen sind,
**dadurch gekennzeichnet, dass** die Freiläufe Zahnradfreiläufe (27, 28, 33, 34) umfassen,
wobei das erste Zahnrad (6) mit einem ersten Zahnradfreilauf (27) und einem zweiten Zahnradfreilauf (28) gekoppelt ist, wobei die ersten und zweiten Zahnradfreiläufe (27, 28) jeweils derart ausgebildet sind, dass sie in Freilaufrichtung (30) relativ zu dem ersten Zahnrad (6) drehbar sind und in Sperrrichtung (29) gegen eine Drehbewegung relativ zu dem ersten Zahnrad (6) gesperrt sind;
wobei das zweite Zahnrad (7) mit einem dritten Zahnradfreilauf (33) und einem vierten Zahnradfreilauf (34) gekoppelt ist, wobei die dritten und vierten Zahnradfreiläufe (33, 34) jeweils derart ausgebildet sind, dass sie in Freilaufrichtung (36) relativ zu dem zweiten Zahnrad (7) drehbar sind und in Sperrrichtung (35) gegen eine Drehbewegung relativ zu dem zweiten Zahnrad (7) gesperrt sind; und
wobei der Taumelkörper (9) eine Anzahl Zahnradsegmente (19, 20, 21, 22) aufweist, die jeweils mit einem der Zahnradfreiläufe (27, 28, 33, 34) der ersten und zweiten Zahnräder (6, 7) kämmen, so dass die Taumelbewegung des Taumelkörpers (9) in eine hin- und hergehende Drehbewegung der Zahnradfreiläufe (27, 28, 33, 34) überführt und eine in die Antriebswelle (3) eingeleitete Antriebskraft auf das Abtriebszahnrad (5) übertragen wird.

2. Zahnradgetriebe nach Anspruch 1, wobei die Steuermittel (13) dazu ausgebildet sind, einen Neigungswinkel der Taumelscheibe (10) einzustellen, bei dem die Taumelscheibe (10) bei drehender Antriebswelle (3) keine Taumelbewegung ausführt.

3. Zahnradgetriebe nach einem der vorhergehenden Ansprüche, wobei die Steuermittel (13) zum stufenlosen Einstellen des Neigungswinkels der Taumelscheibe (10) ausgebildet sind.

4. Zahnradgetriebe nach einem der vorhergehenden Ansprüche, wobei die ersten bis vierten Zahnradfreiläufe (27, 28, 33, 34) derart mit dem Taumelkörper (9) gekoppelt sind, dass die ersten bis vierten Zahnradfreiläufe (27, 28, 33, 34) die Antriebskraft nacheinander auf das erste und das zweite Zahnrad (6, 7) übertragen.

5. Zahnradgetriebe nach einem der vorhergehenden Ansprüche,
wobei der Taumelkörper (9) vier Zahnradsegmente (19, 20, 21, 22) aufweist, die an dem Taumelkörper (9) fest angebracht oder integral mit dem Taumelkörper (9) ausgebildet sind, wobei ein erstes Zahnradsegment (19) an dem Taumelkörper (9) mit dem ersten Zahnradfreilauf (27) kämmt, wobei ein zweites Zahnradsegment (20) an dem Taumelkörper (9) mit dem zweiten Zahnradfreilauf (28) kämmt, wobei ein drittes Zahnradsegment (21) an dem Taumelkörper (9) mit dem dritten Zahnradfreilauf (33) kämmt, und wobei ein viertes Zahnradsegment (22) an dem Taumelkörper (9) mit dem vierten Zahnradfreilauf (34) kämmt,
wobei das erste (19) und das dritte Zahnradsegment (21) an einem ersten Ende (17) des Taumelkörpers (9) vorgesehen sind und wobei das zweite (20) und das vierte Zahnradsegment (22) an einem zweiten Ende (18), entgegengesetzt zum ersten Ende (17), des Taumelkörpers (9) angeordnet sind.

6. Zahnradgetriebe nach Anspruch 5, wobei jeweils zwei Zahnradsegmente (19, 21; 20, 22) einstückig ausgebildet sind.

7. Zahnradgetriebe nach einem der vorhergehenden Ansprüche, wobei die Drehachsen (8) des ersten Zahnrads (6) und des zweiten Zahnrads (7) quer zur Taumelscheibendrehachse (11) angeordnet sind.

8. Zahnradgetriebe nach einem der vorhergehenden Ansprüche, wobei die Steuermittel (13) ein oder mehrere Linearstelleinheiten mit axial verfahrbarem Stellglied (23, 24) umfassen, vorzugsweise in Form eines Spindeltriebs, besonders bevorzugt mit einer Spindel (39) mit einem Rechts- und einem Linksgewinde (40, 41).

9. Zahnradgetriebe nach Anspruch 8, wobei die eine oder die mehreren Linearstelleinheiten zumindest teilweise innerhalb der Antriebswelle (3) angeordnet sind.

10. Zahnradgetriebe nach Anspruch 8 oder 9, wobei das Stellglied (23, 24) auf oder in der Antriebswelle (3) relativ zu der Antriebswelle (3) drehfest aber axial verfahrbar geführt ist.

11. Zahnradgetriebe nach einem der vorhergehenden Ansprüche, wobei die eine oder die mehreren Linearstelleinheiten einen oder mehrere Gelenkarme (25, 26) umfassen, die das Stellglied (23, 24) und die Taumelscheibe (10) verbinden.

12. Zahnradgetriebe nach Anspruch 11, wobei mehrere Stellglieder (23, 24) entlang der Taumelscheibendrehachse (11) auf entgegengesetzten Seiten der Taumelscheibe (10) angeordnet sind, und wobei die Stellglieder (23, 24) und die zugehörigen Gelenkarme (25, 26) auf den entgegengesetzten Seiten der Taumelscheibe (9) mit Bezug auf das Schwenkzentrum der Taumelscheibe (9) symmetrisch angeordnet sind.

13. Zahnradgetriebe nach einem der vorhergehenden Ansprüche, wobei die Steuermittel eine Linearstelleinheit mit einem koaxial oder parallel zur Antriebswelle verfahrbaren Stellglied (46) und einer Antriebsquelle umfassen, wobei das Stellglied (46) auf einer Spindel (48) angeordnet ist, die an der Außenseite des Gehäuse (2) angeordnet ist, und wobei das Stellglied (46) durch die Wand des Gehäuses (2) hindurch mit einem oder mehreren Gelenkarmen (47) gekoppelt ist.

## Claims

1. Gearwheel transmission (1), comprising:
a housing (2);
a drive shaft (3) that is rotatably mounted in the housing (2);
an output gearwheel (5) that is rotatably mounted in the housing (2);
a transmission mechanism operatively coupling the drive shaft (3) and the output gearwheel (5), the transmission mechanism comprising a wobble member (9), which is arranged between the drive shaft (3) and the output gearwheel (5) and is designed to perform a wobbling motion when the drive shaft (3) rotates, the wobble member (9) being coupled to the output gearwheel (5) such that the wobbling motion of the wobble member (9) is converted into a rotation of the output gearwheel (5),
a first gearwheel (6) and a second gearwheel (7), each of which is rotationally mounted in the housing (2) and coupled to the output gearwheel (5),
wherein the first gearwheel (6) and the second gearwheel (7) are each coupled to at least one freewheel (27, 28, 33, 34), wherein the freewheels (27, 28, 33, 34) are designed such that they are rotatable in a freewheel direction (30, 36) relative to the respective first and second gearwheel (6, 7) and are locked against rotational movement relative to the respective gearwheel (6, 7) in a locking direction (29, 35);
a wobble plate (10) arranged on the drive shaft (3) and supporting the wobble member (9), wherein the wobble plate (10) is rotatably mounted in the wobble member (9) and wherein the wobble plate (10) is connected in a rotationally fixed manner to the drive shaft (3) such that the wobble plate (10) rotates with the drive shaft (3) about a wobble plate axis of rotation (11), wherein an angle of inclination of the wobble plate (10) relative to the wobble plate axis of rotation (11) is adjustable in order to set the wobble plate (10) in a wobbling motion with respect to the wobble plate axis of rotation (11) when the drive shaft (3) rotates and to cause a wobbling motion of the wobble member (9) via the mounting (16) of the wobble plate (10) in the wobble member (9),
wherein the wobble member (9) is coupled to the freewheels (27, 28, 33, 34) such that a wobbling motion of the wobble member (9) is converted into a back and forth rotational movement of the freewheels (27, 28, 33, 34) and a drive force introduced into the drive shaft (3) is transmitted to the output gearwheel (5),
further comprising control means (13) for changing the angle of inclination of the wobble plate (10) with respect to the wobble plate axis of rotation (11),
**characterised in that** the freewheels comprise gearwheel freewheels (27, 28, 33, 34),
wherein the first gearwheel (6) is coupled to a first gearwheel freewheel (27) and a second gearwheel freewheel (28), wherein the first and second gearwheel freewheels (27, 28) are each designed such that they are rotatable in the freewheel direction (30) relative to the first gearwheel (6) and are locked against rotational movement relative to the first gearwheel (6) in the locking direction (29);
wherein the second gearwheel (7) is coupled to a third gearwheel freewheel (33) and a fourth gearwheel freewheel (34), wherein the third and fourth gearwheel freewheels (33, 34) are each designed such that they are rotatable in the freewheel direction (36) relative to the second gearwheel (7) and are locked against rotational movement relative to the second gearwheel (7) in the locking direction (35); and
wherein the wobble member (9) has a plurality of gearwheel segments (19, 20, 21, 22), each of which meshes with one of the gearwheel freewheels (27, 28, 33, 34) of the first and second gearwheels (6, 7), such that the wobbling motion of the wobble member (9) is converted into a back and forth rotational movement of the gearwheel freewheels (27, 28, 33, 34) and a drive force introduced into the drive shaft (3) is transmitted to the output gearwheel (5).

2. Gearwheel transmission according to claim 1, wherein the control means (13) are designed to set an angle of inclination of the wobble plate (10) at which the wobble plate (10) does not perform a wobbling motion when the drive shaft (3) rotates.

3. Gearwheel transmission according to any of the preceding claims, wherein the control means (13) are designed to continuously adjust the angle of inclination of the wobble plate (10).

4. Gearwheel transmission according to any of the preceding claims, wherein the first to fourth gearwheel freewheels (27, 28, 33, 34) are coupled to the wobble member (9) such that the first to fourth gearwheel freewheels (27, 28, 33, 34) transmit the drive force successively to the first and second gearwheels (6, 7).

5. Gearwheel transmission according to any of the preceding claims,
wherein the wobble member (9) has four gearwheel segments (19, 20, 21, 22), which are fixedly attached to the wobble member (9) or are formed integrally with the wobble member (9), wherein a first gearwheel segment (19) on the wobble member (9) meshes with the first gearwheel freewheel (27), wherein a second gearwheel segment (20) on the wobble member (9) meshes with the second gearwheel freewheel (28), wherein a third gearwheel segment (21) on the wobble member (9) meshes with the third gearwheel freewheel (33), and wherein a fourth gearwheel segment (22) on the wobble member (9) meshes with the fourth gearwheel freewheel (34),
wherein the first (19) and third (21) gearwheel segments are provided at a first end (17) of the wobble member (9), and wherein the second (20) and fourth (22) gearwheel segments are arranged at a second end (18), opposite the first end (17) of the wobble member (9).

6. Gearwheel transmission according to claim 5, wherein in each case two gearwheel segments (19, 21; 20, 22) are formed in one piece.

7. Gearwheel transmission according to any of the preceding claims, wherein the axes of rotation (8) of the first gearwheel (6) and the second gearwheel (7) are arranged transversely to the wobble plate axis of rotation (11).

8. Gearwheel transmission according to any of the preceding claims, wherein the control means (13) comprise one or a plurality of linear adjustment units with an axially displaceable actuator (23, 24), preferably in the form of a spindle drive, particularly preferably with a spindle (39) with a right-hand and a left-hand thread (40, 41).

9. Gearwheel transmission according to claim 8, wherein the one or a plurality of linear adjustment units are arranged at least partially within the drive shaft (3).

10. Gearwheel transmission according to claim 8 or 9, wherein the actuator (23, 24) is guided on or in the drive shaft (3) in a rotationally fixed but axially displaceable manner relative to the drive shaft (3).

11. Gearwheel transmission according to any of the preceding claims, wherein the one or a plurality of linear adjustment units comprise one or a plurality of articulated arms (25, 26) connecting the actuator (23, 24) and the wobble plate (10).

12. Gearwheel transmission according to claim 11, wherein a plurality of actuators (23, 24) are arranged along the wobble plate axis of rotation (11) on opposite sides of the wobble plate (10), and wherein the actuators (23, 24) and the associated articulated arms (25, 26) are arranged symmetrically on the opposite sides of the wobble plate (9) with respect to the pivot centre of the wobble plate (9).

13. Gearwheel transmission according to any of the preceding claims, wherein the control means comprise a linear adjustment unit with an actuator (46) movable coaxially or parallel to the drive shaft and a drive source, wherein the actuator (46) is arranged on a spindle (48) arranged on the outside of the housing (2), and wherein the actuator (46) is coupled to one or a plurality of articulated arms (47) through the wall of the housing (2).

## Revendications

1. Transmission à roue dentée (1), comprenant :
un boîtier (2) ;
un arbre d'entraînement (3) qui est monté rotatif dans le boîtier (2) ;
une roue dentée de sortie (5) qui est montée rotative dans le boîtier (2) ;
un mécanisme de transmission qui couple fonctionnellement l'arbre d'entraînement (3) et la roue dentée de sortie (5), ledit mécanisme de transmission comprenant un élément oscillant (9) qui est disposé entre l'arbre d'entraînement (3) et la roue dentée de sortie (5) et qui est conçu pour effectuer un mouvement d'oscillation lors de la rotation de l'arbre d'entraînement (3), ledit élément oscillant (9) étant couplé à la roue dentée de sortie (5) de sorte que le mouvement d'oscillation de l'élément oscillant (9) soit transformé en une rotation de la roue dentée de sortie (5),
une première roue dentée (6) et une seconde roue dentée (7), qui sont respectivement montées rotatives dans le boîtier (2) et couplées à la roue dentée de sortie (5),
ladite première roue dentée (6) et ladite seconde roue dentée (7) étant chacune couplées à au moins une roue libre (27, 28, 33, 34), lesdites roues libres (27, 28, 33, 34) étant conçues de sorte qu'elles puissent tourner dans un sens de rotation libre (30, 36) par rapport aux première et seconde roues dentées (6, 7) respectives et soient bloquées dans un sens de blocage (29, 35) contre un mouvement de rotation par rapport à la roue dentée (6, 7) respective ;
un disque oscillant (10) disposé sur l'arbre d'entraînement (3) et qui porte l'élément oscillant (9), ledit disque oscillant (10) étant monté de manière rotative dans l'élément oscillant (9) et ledit disque oscillant (10) étant relié de manière solidaire en rotation à l'arbre d'entraînement (3) de sorte que le disque oscillant (10) tourne avec l'arbre d'entraînement (3) autour de l'axe de rotation (11) du disque oscillant, l'angle d'inclinaison du disque oscillant (10) par rapport à l'axe de rotation (11) du plateau oscillant étant réglable de manière à déplacer le disque oscillant (10) dans un mouvement d'oscillation par rapport à l'axe de rotation (11) du disque oscillant lorsque l'arbre d'entraînement (3) tourne et à provoquer un mouvement d'oscillation de l'élément oscillant (9) par l'intermédiaire du palier (16) du disque oscillant (10) dans l'élément oscillant (9),
ledit élément oscillant (9) étant couplé aux roues libres (27, 28, 33, 34) de sorte qu'un mouvement d'oscillation de l'élément oscillant (9) soit transformé en un mouvement de rotation alternatif des roues libres (27, 28, 33, 34) et qu'une force d'entraînement introduite dans l'arbre d'entraînement (3) soit transmise à la roue dentée de sortie (5),
lesdits moyens de commande (13) étant en outre prévus pour modifier l'angle d'inclinaison du disque oscillant (10) par rapport à l'axe de rotation (11) du disque oscillant,
**caractérisée en ce que** les roues libres comprennent des roues dentées libres (27, 28, 33, 34),
ladite première roue dentée (6) étant couplée à une première roue dentée libre (27) et à une deuxième roue dentée libre (28), lesdites première et deuxième roues dentées libres (27, 28) étant chacune conçues de sorte qu'elles puissent tourner dans le sens de rotation libre (30) par rapport à la première roue dentée (6) et soient bloquées dans le sens de blocage (29) contre un mouvement de rotation par rapport à la première roue dentée (6) ;
ladite seconde roue dentée (7) étant couplée à une troisième roue dentée libre (33) et à une quatrième roue dentée libre (34), lesdites troisième et quatrième roues dentées libres (33, 34) étant chacune conçues de sorte qu'elles puissent tourner dans le sens de rotation libre (36) par rapport à ladite seconde roue dentée (7) et soient bloquées dans le sens de blocage (35) contre un mouvement de rotation par rapport à ladite seconde roue dentée (7) ; et
ledit élément oscillant (9) comportant un certain nombre de segments de roue dentée (19, 20, 21, 22) qui s'engrènent chacun avec l'une des roues dentées libres (27, 28, 33, 34) des première et secondes roues dentées (6, 7) de sorte que le mouvement d'oscillation de l'élément oscillant (9) soit transformé en un mouvement de rotation alternatif des roues dentées libres (27, 28, 33, 34) et qu'une force d'entraînement introduite dans l'arbre d'entraînement (3) soit transmise à la roue dentée de sortie (5).

2. Transmission à roue dentée selon la revendication 1, lesdits moyens de commande (13) étant conçus pour régler l'angle d'inclinaison du disque oscillant (10) selon lequel le disque oscillant (10) n'effectue pas de mouvement d'oscillation lorsque l'arbre d'entraînement (3) tourne.

3. Transmission à roue dentée selon l'une des revendications précédentes, lesdits moyens de commande (13) étant conçus pour le réglage en continu de l'angle d'inclinaison du disque oscillant (10).

4. Transmission à roue dentée selon l'une des revendications précédentes, lesdites première à quatrième roues dentées libres (27, 28, 33, 34) étant couplées à l'élément oscillant (9) de sorte que les première à quatrième roues dentées libres (27, 28, 33, 34) transmettent successivement la force d'entraînement aux première et seconde roues dentées (6, 7).

5. Transmission à roue dentée selon l'une des revendications précédentes,
ledit élément oscillant (9) comportant quatre segments de roue dentée (19, 20, 21, 22) qui sont fixés de manière fixe sur l'élément oscillant (9) ou qui sont formés d'un seul tenant avec l'élément oscillant (9), un premier segment de roue dentée (19) s'engrenant sur l'élément oscillant (9) avec la première roue dentée libre (27), un deuxième segment de roue dentée (20) s'engrenant sur l'élément oscillant (9) avec la deuxième roue dentée libre (28), un troisième segment de roue dentée (21) s'engrenant sur l'élément oscillant (9) avec la troisième roue dentée libre (33), et un quatrième segment de roue dentée (22) s'engrenant sur l'élément oscillant (9) avec la quatrième roue dentée libre (34),
ledit premier (19) et ledit troisième segment de roue dentée (21) étant pourvus au niveau d'une première extrémité (17) dudit élément oscillant (9) et ledit deuxième (20) et ledit quatrième segment de roue dentée (22) étant disposés au niveau d'une seconde extrémité (18) opposée à ladite première extrémité (17) dudit élément oscillant (9).

6. Transmission à roue dentée selon la revendication 5, deux segments de roue dentée (19, 21 ; 20, 22) étant formés d'un seul tenant.

7. Transmission à roue dentée selon l'une des revendications précédentes, les axes de rotation (8) de la première roue dentée (6) et de la seconde roue dentée (7) étant disposés transversalement par rapport à l'axe de rotation (11) du disque oscillant.

8. Transmission à roue dentée selon l'une des revendications précédentes, lesdits moyens de commande (13) comprenant une ou plusieurs unités de réglage linéaire avec un actionneur (23, 24) pouvant être déplacé axialement, de préférence sous la forme d'un entraînement à broche, particulièrement préférablement avec une broche (39) dotée d'un filetage à droite et d'un filetage à gauche (40, 41).

9. Transmission à roue dentée selon la revendication 8, lesdites une ou plusieurs unités de réglage linéaire étant disposées au moins partiellement à l'intérieur de l'arbre d'entraînement (3).

10. Transmission à roue dentée selon la revendication 8 ou 9, ledit actionneur (23, 24) étant guidé de manière fixe en rotation mais pouvant être déplacé axialement sur ou dans l'arbre d'entraînement (3) par rapport à l'arbre d'entraînement (3).

11. Transmission à roue dentée selon l'une des revendications précédentes, lesdites une ou plusieurs unités de réglage linéaire comprenant un ou plusieurs bras articulés (25, 26) reliant ledit actionneur (23, 24) et ledit disque oscillant (10).

12. Transmission à roue dentée selon la revendication 11, plusieurs actionneurs (23, 24) étant disposés le long de l'axe de rotation (11) du disque oscillant sur des côtés opposés du disque oscillant (10), et lesdits actionneurs (23, 24) et lesdits bras articulés associés (25, 26) étant disposés symétriquement sur les côtés opposés du disque oscillant (9) par rapport au centre de pivotement du disque oscillant (9).

13. Transmission à roue dentée selon l'une des revendications précédentes, lesdits moyens de commande comprenant une unité de réglage linéaire avec un actionneur (46) pouvant être déplacé coaxialement ou parallèlement à l'arbre d'entraînement et une source d'entraînement, ledit actionneur (46) étant disposé sur une broche (48) qui est disposée à l'extérieur du boîtier (2), et ledit actionneur (46) étant couplé à un ou plusieurs bras articulés (47) à travers la paroi du boîtier (2).
